# EUROPÄISCHE PATENTSCHRIFT

(11) **EP 2 921 834 B1**
(45) Veröffentlichungstag und Bekanntmachung des Hinweises auf die Patenterteilung: **06.06.2018**
(21) Anmeldenummer: 15401020.1
(22) Anmeldetag: 17.03.2015
(51) Int. Cl.: G01L 3/10, A01C 17/00

(54) **VORRICHTUNG ZUR BESTIMMUNG DES DREHMOMENTES EINER STREUSCHEIBE EINES SCHLEUDERSTREUERS**
DEVICE FOR DETERMINING THE TORQUE OF A SPINNING DISC OF A CENTRIFUGE SPINNER
DISPOSITIF DE DÉTERMINATION DU COUPLE D'UN DISQUE DIFFUSEUR D'UN ÉPANDEUR D'ENGRAIS

(30) Priorität: 20.03.2014 DE 102014103793
(43) Veröffentlichungstag der Anmeldung: 23.09.2015
(73) Patentinhaber: Amazonen-Werke H. Dreyer GmbH & Co. KG, 49205 Hasbergen (DE)
(72) Erfinder: Johannaber, Stefan Jan, 49536 Lienen (DE); Teckemeyer, Stephan, 49504 Lotte (DE)

(56) Entgegenhaltungen:
- EP-A1- 0 963 690
- EP-A1- 2 514 293
- EP-A2- 1 008 288
- EP-A2- 2 072 984
- DE-A1-102011 007 465
- DE-A1-102012 209 770

## Beschreibung

Die Erfindung betrifft eine Vorrichtung zur Bestimmung des Drehmoments einer Streuscheibe eines Schleuderstreuers.

In der Landwirtschaft oder bei anderen Streufahrzeugen, beispielsweise dem Winterdienst, werden zum Ausbringen von Streugut wie Dünger oder Streusalz Streuscheiben mittels eines Getriebes derart angetrieben, dass sie schnell rotieren und so Streugut, das von oben auf die Streuscheibe aufgebracht wird, abschleudern. Dabei ist es ist wünschenswert, eine möglichst vorhersagbare, insbesondere gleichmäßige, Verteilung des Streuguts zu erreichen.

Um die Ausbringmenge zu bestimmen wurde schon in der EP 0 963 690A1 vorgeschlagen, das mittlere Antriebsdrehmoment der Streuscheiben zu messen, da dieses in etwa linear zum Massenstrom des weggeschleuderten Streuguts ist. Hier werden werksseitig je nach Art des Antriebes der Schleuderscheibe entsprechend geeignete Sensoren eingebaut. Bei einem hydraulischen Antrieb werden Drucksensoren, bei einem mechanischen Antrieb Inkrementagbeber und ein einem elektrischen Antrieb Stromaufnahmesensoren eingebaut.

Durch die DE 10 2012 209 770 A1 ist ebenfalls der werksseitige Einbau von Sensoren zur Drehmomentmessung bei Schleuderstreuern bekannt. Hier werden magnetische Sensoren verwendet.

So ist es z.B. aus der EP 2 625 945 weiterhin bekannt, den Massenstrom über eine Drehmomentmesssung mit einem Sensor im Antriebsstrang des Getriebes, z.B. über die Torsion einer Welle im Antriebsstrang, zu ermitteln. Dazu ist eine die Verteilerscheibe tragende Welle aus einem permanentmagnetischen, wie einem ferromagnetischen oder ferrimagnetischen, Material ausgebildet, wobei dann die Veränderung des Magnetfelds bei einer Torsion der Welle sensorisch ermittelt wird. Insbesondere kann das Magnetfeld ermittelt werden, indem gegensinnige Empfängerspulen, in denen sich in Abwesenheit eines Feldes die induzierten Spannungen aufheben, aber im Falle eines angelegten Magnetfeldes infolge von Torsion der Welle ein hieraus resultierendes elektrisches Signal erzeugt wird, welches proportional zu dem Magnetfeld ist, verwendet werden.

Diese Art von Sensorik wird bereits bei der Herstellung des Streuers im allgemeinem im Antriebsgehäuse mit eingebaut. Dies erfordert die konstruktive Auslegung des Gehäuses bzw. der Wellen und auch die vorherige Entscheidung ob ein Streuer mit oder ohne Drehmomentmessungsmöglichkeit hergestellt und verkauft wird.

Daher ist es eine Aufgabe der Erfindung, eine Vorrichtung zur Bestimmung des Drehmoments einer rotierbaren Streuscheibe eines Schleuderstreuers bereitzustellen, die eine flexiblere Verwendung dieser Technologie und die nachträgliche Anbringung gestattet.

Diese Aufgabe wird durch den Gegenstand des Patentanspruchs 1 gelöst.

Demnach ist die erfindungsgemäße Vorrichtung zur Bestimmung des Drehmoments in Form eines unabhängigen Sensormoduls zum Austauschen, Anbringen an und/oder Integrieren in verschiedene Arten von Schleuderstreuern, insbesondere zur Nachrüstung von Schleuderstreuern, ausgebildet.

Das ermöglicht es weitgehend unabhängig von der ursprünglichen Konstruktion an einem Streuer auch nachträglich die Sensorik noch anzubringen und so diesen umzurüsten.

Der Begriff "unabhängig" im Zusammenhang mit dem Sensormodul ist derart zu verstehen, dass das Sensormodul beispielsweise als Bausatz oder Baugruppe unabhängig von dem Schleuderstreuer hergestellt und/oder vertrieben werden kann und/oder unabhängig von der Art bzw. des Modells des Schleuderstreuers anwendbar ist. Somit ist das Sensormodul so ausgebildet, dass es an verschiedene Arten bzw. Modelle von Schleuderstreuern angebracht werden oder darin integriert werden kann. Dabei muss der Schleuderstreuer keine bestimmten Anforderungen erfüllen, außer dass er mindestens eine Streuscheibe und ein damit verbundenes Getriebe umfassen muss. Insbesondere ist das Sensormodul derart ausgebildet, dass es nachträglich (also nach der Herstellung des Schleuderstreuers) an den Schleuderstreuer angebracht oder darin integriert werden kann.

Daher eignet sich das Sensormodul besonders zur Nachrüstung von Schleuderstreuern. Auch ein Austausch des Sensormoduls, beispielsweise bei einem Defekt, ist einfach möglich.

Ein Schleuderstreuer kann zwei oder mehr rotierbare Streuscheiben umfassen, die jeweils mit einem Außengetriebe verbunden sind und mittels des jeweiligen Außengetriebes in Rotation versetzbar sind. Das Außengetriebe ist dabei über eine Antriebswelle mit einem Mittengetriebe verbunden. Das Mittengetriebe, die Antriebswellen und die Außengetriebe können einen Antriebsstrang bilden oder Teil eines Antriebsstrangs sein. Ein Antriebsstrang kann jedoch auch nur in Form eines einzigen Getriebes ausgebildet sein, sofern nur eine Streuscheibe vorgesehen ist.

Die Vorrichtung kann zum Anbringen an den Antriebsstrang der Streuscheibe oder zum Integrieren in den Antriebsstrang der Streuscheibe ausgebildet sein. Insbesondere kann die Vorrichtung mittels Erfassung der Torsion von einem oder mehreren Elementen des Antriebsstrangs, beispielsweise in einem Getriebe oder einer Antriebswelle, ausgebildet sein.

Die Vorrichtung kann derart ausgebildet sein, dass sie an zugängliche Bereiche des Schleuderstreuers angebracht werden kann bzw. in zugängliche Bereiche des Schleuderstreuers integriert werden kann. Beispielsweise kann die Vorrichtung derart ausgebildet sein, dass sie an nicht eingehauste bzw. freiliegende Bereiche des Schleuderstreuers anbringbar ist. Ein Umbau ist somit nicht erforderlich. Alternativ kann die Vorrichtung derart ausgebildet sein, dass sie an Bereiche des Schleuderstreuers angebracht werden kann, die ohne Zerstörung, also beispielsweise durch das Lösen von Schrauben oder Klemmen, zugänglich sind. Insbesondere kann die Vorrichtung ein Gehäuse mit einem Sensor umfassen, das mittels Schrauben und/oder Klemmen am Antriebsstrang befestigbar ist.

Die Vorrichtung kann derart ausgebildet sein, dass sie ein Ersetzen eines zugänglichen Bestandteils des Schleuderstreuers ermöglicht, insbesondere ein Ersetzen von einem oder mehreren Elementen eines Antriebsstrangs. Der Bestandteil kann eine zerstörungsfrei zugängliche und zerstörungsfrei lösbare Befestigung aufweisen.

Insbesondere kann der Bestandteil, der ersetzt werden soll, direkt zugänglich sein oder zumindest teilweise direkt zugänglich sein. Alternativ kann er ganz oder teilweise in einem Gehäuse liegen, das beispielsweise mittels Schrauben angebracht ist. Der Bestandteil kann an anderen Bestandteilen derart befestigt sein, dass die Befestigung ganz oder teilweise freiliegt oder ganz oder teilweise innerhalb eines Gehäuses liegt, das zerstörungsfrei geöffnet und verschlossen werden kann, beispielsweise mittels Schrauben.

Beispielsweise kann die Vorrichtung zum Ersetzen einer Antriebswelle ausgebildet sein. In diesem Fall umfasst die Vorrichtung eine Antriebswelle und einen Sensor. Die Befestigung kann beispielsweise in Form einer formschließenden (Steck-)Verbindung und/oder eine Verbindung mittels Schrauben ausgebildet sein.

In den oben beschriebenen Fällen kann "zugänglich" beispielsweise bedeuten, dass ein Bereich oder eine Befestigung ohne Zerstörung und/oder ohne Umbau zugänglich sind. Das ist beispielsweise an Getriebeeingangswellen oder Getriebeausgangswellen oder bei Antriebswellen häufig der Fall.

Die Vorrichtung kann zum Anbringen an ein Getriebe, insbesondere an eine Eingangswelle oder an eine Ausgangswelle eines Getriebes, oder zum Anbringen an eine Antriebswelle ausgebildet sein.

Die Vorrichtung kann zum Anbringen an ein, einer Streuscheibe zugeordnetem, Außengetriebe ausgebildet sein. Alternativ oder zusätzlich kann die Vorrichtung zum Anbringen an ein Mittengetriebe, das mittels einer Antriebswelle mit einem der Streuscheibe zugeordneten Außengetriebe verbunden ist, ausgebildet sein. Alternativ oder zusätzlich kann die Vorrichtung zum Anbringen an eine Antriebswelle, die ein Mittengetriebe und ein Außengetriebe verbindet ausgebildet sein.

Die Vorrichtung kann einen Magnetsensor umfassen, der zur Erfassung einer Magnetfeldänderung ausgebildet ist, beispielsweise in Form eines Spulenpaars. Insbesondere kann der Magnetsensor zur Erfassung einer Magnetfeldänderung aufgrund der Torsion einer magnetischen Getriebeeingangswelle oder einer magnetischen Getriebeausgangswelle oder einer magnetischen Antriebswelle ausgebildet sein, insbesondere einer Antriebswelle, die ein Mittengetriebe mit einem Außengetriebe des Schleuderstreuers verbindet. Dies ermöglicht eine kontaktlose Bestimmung der Drehmomentänderung.

Die Vorrichtung kann einen Bestandteil umfassen, der ein magnetisches und/oder ein magnetisierbares Material umfasst, insbesondere eine zumindest teilweise magnetische oder magnetisierbare Antriebswelle. Dies ermöglicht ein kontaktloses Messen der Drehmomentänderung ohne dass der Schleuderstreuer bereits ein magnetisierbares oder magnetisches Material umfassen muss.

Die Vorrichtung kann modular ausgebildet sein. Beispielsweise kann die Vorrichtung in Form eines Bausatzes ausgebildet sein, der wahlweise einen oder mehrere Magnetsensoren umfasst und, falls nötig bzw. erwünscht, zusätzlich magnetische oder magnetisierbare Bestandteile zum Ersetzen bestimmter Bestandteile des Schleuderstreuers und/oder zum Anbringen an den Schleuderstreuer, beispielsweise zum Nachrüsten des Schleuderstreuers, umfasst. Dabei kann der Bausatz einen oder mehrere Magnetsensoren umfassen, die je nach Bedarf, zum Anbringen an bestimmte Bestandteile des Schleuderstreuers und zum Erfassen von Magnetfeldstärken, die durch die Torsion der entsprechenden Bestandteile erzeugt werden, ausgebildet sind.

So kann ein Bausatz beispielsweise geeignet sein, an einem Schleuderstreuer angebracht zu werden, der bereits eine magnetische oder magnetisierbare Antriebswelle umfasst. In diesem Fall könnte der Bausatz einen oder mehrere Magnetsensoren zur Erfassung der Magnetfeldänderung aufgrund der Torsion der bereits vorhandenen Antriebswelle umfassen, wobei der Sensor zum Anbringen an die Antriebswelle und zum Erfassen der Magnetfeldänderung durch die Torsion der Antriebswelle ausgebildet ist. Alternativ kann der Bausatz für eine nicht magnetische bzw. magnetisierbare Antriebswelle zusätzlich geeignete Magnete umfassen.

Ein Bausatz zum Anbringen an einen Schleuderstreuer, in dem kein magnetisches oder magnetisierbares Material verbaut ist, kann eine oder mehrere neue Antriebswellen umfassen, die ein magnetisches oder magnetisierbares Material umfassen und die zum Austauschen von Antriebswellen des Schleuderstreuers ausgebildet sind. Zusätzlich kann die Vorrichtung einen oder mehrere Magnetsensoren zur Erfassung einer Magnetfeldänderung aufgrund der Torsion der neuen Antriebswelle umfassen. Die Magnetsensoren können in diesem Fall schon an der neuen Antriebswelle angebracht sein. So vorbereitete Magnetsensoren können beispielsweise bereits kalibriert sein.

In diesem Fall kann die Vorrichtung als Komplettlösung geliefert werden, die beispielsweise die Antriebswelle, die Magnetsensoren, ein Sensorgehäuse, die Elektronik und gegebenenfalls Schutzelemente für die Elektronik umfassen.

Eine solche modulare Gestaltung ermöglicht, dass je nach Modell des Schleuderstreuers und je nach Anwendungsfall ein angepasster Bausatz zur Verfügung gestellt werden kann.

Die Vorrichtung kann lösbar an dem Schleuderstreuer befestigbar sein, insbesondere durch Aufstecken und/oder unter Verwendung eines oder mehrerer der folgenden Elemente: Schrauben, Schlauchschellen, Schellenhälften oder Klemmen. Alternativ kann die Vorrichtung nicht lösbar an dem Schleuderstreuer befestigbar sein, beispielsweise mittels Schweißen.

Wenn die Vorrichtung modular ausgebildet ist, können verschiedene Teile der Vorrichtung mittels verschiedener Befestigungsarten an dem Schleuderstreuer befestigbar sein. Insbesondere können manche Teile der Vorrichtung lösbar und andere Teile der Vorrichtung nicht lösbar an dem Schleuderstreuer befestigbar sein.

Die Vorrichtung kann modular ausgebildet sein und zwei Magnetsensoren umfassen, die jeweils an einem an einer Streuscheibe zugeordneten Außengetriebe anbringbar sind. Wenn jeweils jeder Streuscheibe ein Magnetsensor zugeordnet ist, kann die Verteilung des Streuguts präzise gemessen werden. Alternativ kann auch genau ein Sensor an einem Mittengetriebe anbringbar sein.

Die Vorrichtung kann eine Auswerteinrichtung und eine Anzeigeeinrichtung umfassen, so dass Informationen über das Drehmoment der Streuscheiben für einen Benutzer dargestellt werden können. Beispielsweise kann eine Streugutverteilung dargestellt werden. Außerdem ist es möglich, bei einem Unterschied der Drehmomente zwischen verschiedenen Streuscheiben, einen Hinweis an den Benutzer auszugeben und/oder diesen mittels einer Steuereinrichtung auszugleichen, beispielsweise durch anpassen der Antriebsleistung oder der Streugutmenge, die auf die jeweilige Streuscheibe aufgebracht wird.

Weitere Merkmale und Vorteile werden nachfolgend anhand der beispielhaften Figuren erläutert. Dabei zeigt:
- Fig. 1: eine schematische, nicht maßstabsgetreue Darstellung eines Antriebsstrangs eines Schleuderstreuers;
- Fig. 2: eine schematische, nicht maßstabgetreue Darstellung eines erfindungsgemäßen Sensormoduls;
- Fig. 3: nicht maßstabsgetreue Gelenkskizzen des Antriebsstrangs und schematische Darstellung der Anordnung von Magnetsensoren am Antriebsstrang;
- Fig. 4a+b: schematische, nicht maßstabsgetreue Darstellungen eines Außengetriebes und einer an das Außengetriebe angebrachten Vorrichtung in perspektivischer Darstellung sowie in Schnittdarstellung; und
- Fig. 5a+b: eine schematische, nicht maßstabsgetreue Darstellungen einer Vorrichtung umfassend eine Antriebswelle und einen Magnetsensor in perspektivischer Darstellung sowie in Schnittdarstellung.

Die folgenden Ausführungsbeispiele werden jeweils bezogen auf eine Landwirtschaftsmaschine beschrieben, die Trockendünger, insbesondere Mineraldünger mittels zweier Streuscheiben verteilt. Zum besseren Verständnis sind in einigen Figuren der Antriebsstrang und die Streuscheiben des Schleuderstreuers mit abgebildet. Diese sind jedoch nicht Teil der Vorrichtung.

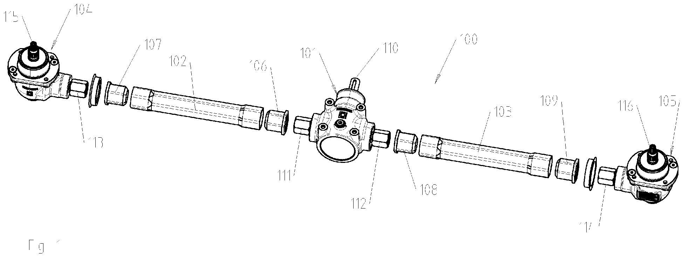

Der in Fig. 1 gezeigte Antriebsstrang 100 eines Schleuderstreuers umfasst ein Mittengetriebe 101, eine erste Antriebswelle 102, eine zweite Antriebswelle 103, ein erstes Außengetriebe 104 und ein zweites Außengetriebe 105. Die Antriebswellen 102 und 103 verbinden jeweils eines der Außengetriebe 104 und 105 mit dem Mittengetriebe 101 mittels Verbindungselementen 106, 107, 108 und 109, beispielsweise Sechskantmitnehmern, und treiben jeweils eine hier nicht dargestellte Streuscheibe an. Das Mittengetriebe 101 umfasst ein Eingangswelle 110 und zwei Ausgangswellen 111, 112. Die Außengetriebe umfassen jeweils eine Eingangswelle 113 und 114 und eine Ausgangswelle 115 und 116.

Die unten beschriebenen Merkmale sind jedoch auch für andere Arten von Schleuderstreuern anwendbar.

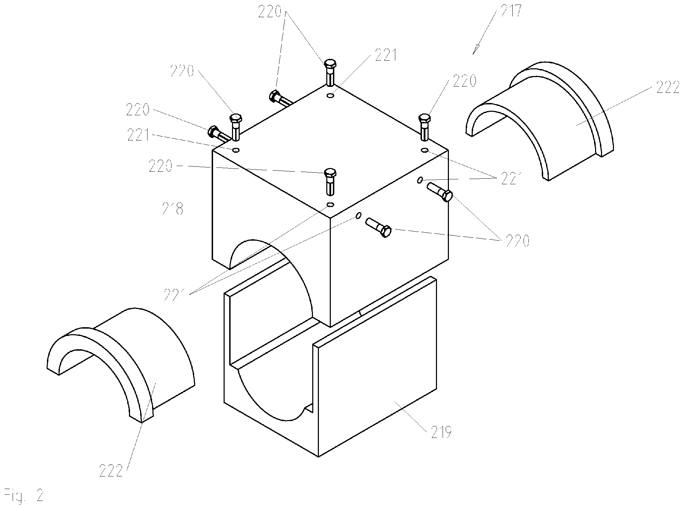

Fig. 2 zeigt ein Beispiel für eine erfindungsgemäße Vorrichtung, die in Form eines Sensormoduls 217 ausgebildet ist. Das Sensormodul 217 umfasst zwei Gehäusehälften 218 und 219, die ineinander gesteckt werden können, so dass Aussparungen in den Gehäusehälften 218 und 219 die Stange einer Welle des Antriebsstanges 100 umschließen, wenn die Gehäusehälften 218 und 219 zusammengesteckt sind. Die Gehäusehälften können mittels Schrauben 220 durch die Löcher 221 aneinander befestigt werden. Das Sensormodul umfasst außerdem die Elemente 222, die in die Aussparungen eingeschoben werden können, um eine bessere Passform je nach Durchmesser der Welle, an der es angebracht werden soll, zu gewährleisten. In dem Gehäuse ist ein Magnetsensor (hier nicht gezeigt) angeordnet. Die Vorrichtung kann mehrere derartige Sensormodule oder auch anders ausgebildete Sensormodule umfassen.

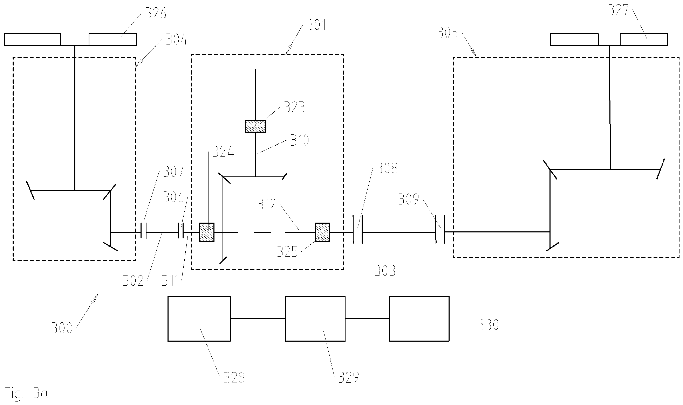

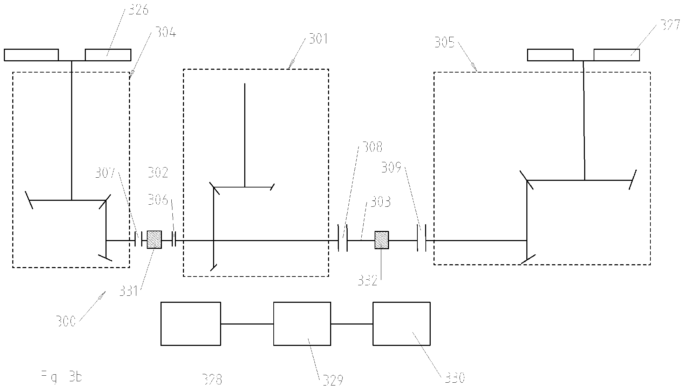

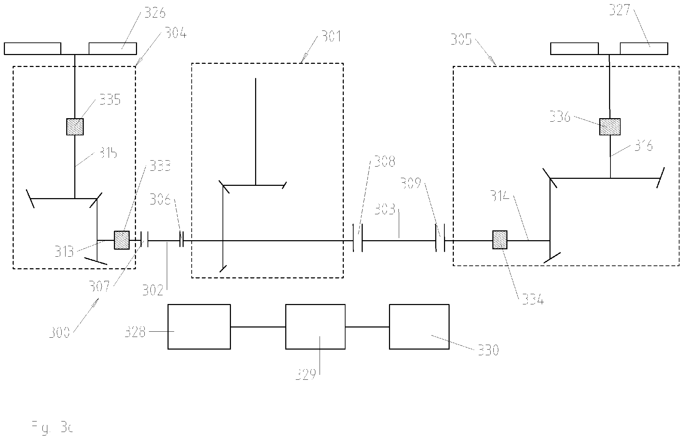

Fig. 3a zeigt Anordnungsmöglichkeiten einer erfindungsgemäßen Vorrichtung anhand von Skelettskizzen des Antriebsstrangs 300. Zwei Abwandlungen von dieser Ausführungsform sind in den Figuren 3b und 3c schematisch gezeigt. Hier wird davon ausgegangen, dass das Mittengetriebe 301, die Antriebswellen 302 und 303 und die Außengetriebe 304 und 305 jeweils magnetisches Material umfassen. Es ist somit nicht unbedingt notwendig, Bestandteile des Schleuderstreuers auszutauschen. Alternativ kann ein Antriebsstrang ohne magnetisches oder magnetisierbares Material vorliegen. In diesem Fall würde die Vorrichtung jeweils geeignete magnetische Elemente im Bausatz enthalten, die an geeigneten Stellen befestigbar sind.

In dem in Fig. 3a gezeigten Beispiel umfasst die Vorrichtung je einen Magnetsensor 323, 324 und 325 an der Eingangswelle 310 und den Ausgangswellen 311 und 312 des Mittengetriebes 301. Ebenfalls dargestellt sind hier die Verbindungselemente 306, 307, 308 und 309 und die horizontal gelagerten Streuscheiben 326 und 327 des Schleuderstreuers.

Die Vorrichtung umfasst ebenfalls eine Auswerteeinrichtung 328 und eine Anzeigeeinrichtung 329, die dem Benutzer ermöglicht, auf Informationen über das gemessene Drehmoment und die Streugutverteilung zuzugreifen. Außerdem ist eine Steuereinrichtung 330 gezeigt, die es ermöglicht, die Streugutverteilung zu steuern, beispielsweise durch Verändern der Streugutmenge oder der Antriebsleistung. Die Auswerteeinrichtung 328, Anzeigeeinrichtung 329 und Steuereinrichtung 330 können jeweils kontaktlos oder, wie hier dargestellt, kontaktbehaftet miteinander verbunden sein. Sie können jeweils, wie hier dargestellt, kontaktlos oder alternativ kontaktbehaftet mit dem Schleuderstreuer verbunden sein. Die Vorrichtung kann auch keine oder nur eine oder zwei der beschriebenen Einrichtungen 328, 329 und 330 umfassen.

In Fig. 3b umfasst die Vorrichtung statt der Magnetsensoren 323, 324 und 325 die Magnetsensoren 331 und 332, die an den Antriebswellen 302 und 303 angebracht sind.

In Figur 3c umfasst die Vorrichtung statt der Magnetsensoren 323, 324 und 325 Magnetsensoren 333 und 334 an den Getriebeeingangswellen 313 und 314 der Außengetriebe und Magnetsensoren 335 und 336 an den Getriebeausgangswellen 315 und 316. Eine beliebige Kombination der oben beschriebenen Ausführungsformen ist möglich. Außerdem kann bei dem Mittengetriebe 301 und bei den Außengetrieben 304 und 305 jeweils auch nur ein Sensor an der jeweiligen Getriebeeingangswelle 310, 315 und 316 oder der (bzw. den) jeweiligen Getriebeausgangswelle(n) 311, 312, 315 und 316 vorgesehen sein.

Die oben beschriebenen Magnetsensoren können Teil eines wie in Figur 2 gezeigten Sensormoduls sein.

Es versteht sich, dass zwischen allen, auch den hier nicht gezeigten, Verbindungsstücken und Lagern zwischen Bestandteilen des Antriebsstrangs jeweils ein Sensor angebracht sein kann, so dass die Messung präzisiert wird. Beispielsweise kann dies zwischen Lagern in einem oder mehreren der Getriebe vorgesehen sein.

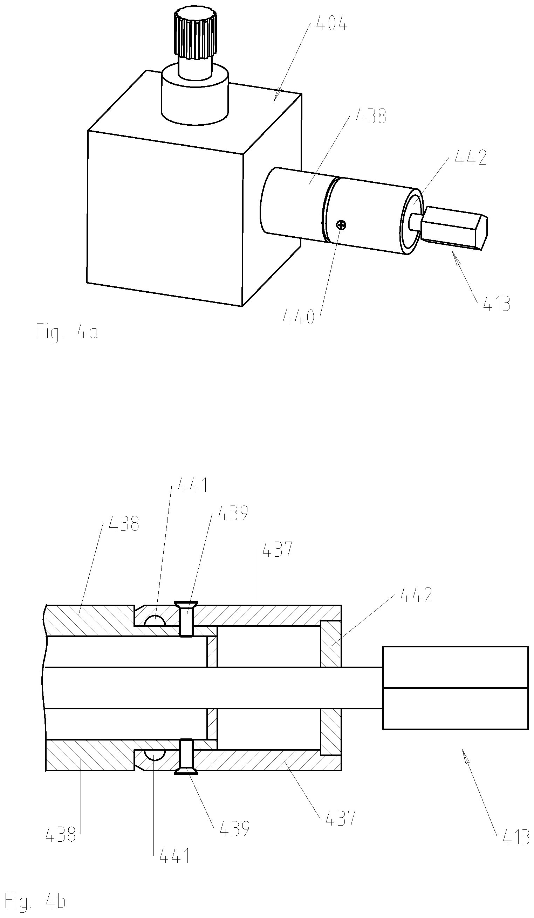

Fig. 4a und 4b zeigen beispielhaft, wie die Eingangswelle 413 eines bereits vorhandenen Außengetriebes 404 mit einem Sensor versehen werden kann. Dieses Beispiel kann ebenfalls auf das Anbringen an einer Ausgangswelle, und auf das Anbringen an die Eingangswelle oder Ausgangswelle eines Mittengetriebes angewandt werden. Dabei wird ein Sensorgehäuse 437 auf eine Außenfläche 438 des Getriebes 404 gesteckt wobei es durch die Passform und/oder gegebenenfalls mit Befestigungsmitteln 439, beispielsweise Schrauben oder Nieten, die in Löcher 440 in der Außenfläche 438 gesteckt werden daran gesichert ist. Dies geschieht unter Verwendung eines O-Rings 441 und einer Dichtung 442. Es kann hierzu zweckdienlich oder notwendig sein, eine Verlängerung der Eingangswelle 413 vorzusehen. Die Spulen des Magnetsensors (hier nicht gezeigt) können beispielsweise auf einer Platine liegen, die parallel zur Antriebswelle in einer Aussparung im Inneren des Gehäuses 437 eingeschoben ist. Außerdem kann ein Kabel, das zu dem Magnetsensor führt, in einer Aussparung im Gehäuse parallel zu der Antriebswelle geführt werden, um ein Abknicken und eine Belastung der elektrischen Verbindung mit dem Magnetsensor zu vermeiden (hier ebenfalls nicht gezeigt). Die Vorrichtung ist also modular ausgebildet und umfasst einen Sensor, das Sensorgehäuse 437 die Befestigungsmittel 439, den O-Ring 441, die Dichtung 442, und gegebenenfalls die Verlängerung der Eingangswelle.

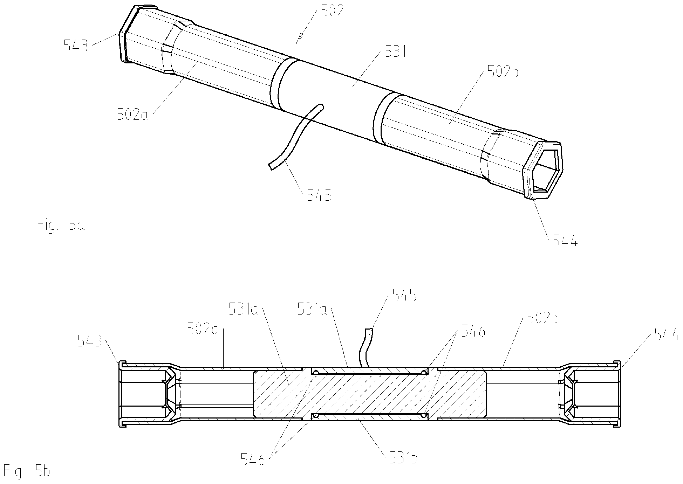

Für das in Fig. 5 gezeigte Beispiel wird angenommen, dass die Antriebswellen 102 und 103 aus dem ersten Ausführungsbeispiel nicht aus einem magnetischen oder magnetisierbaren Material bestehen. Die modulare Vorrichtung umfasst sowohl zwei Antriebswellen (gezeigt ist hier nur eine der beiden Antriebswellen 502), die jeweils ein magnetisches Material umfassen, als auch zwei Magnetsensoren (gezeigt ist hier nur Magnetsensor 531). Jeweils ein Magnetsensor ist einer der Antriebswellen zugeordnet. Wie in Fig. 4 gezeigt, umfasst jede der Antriebswellen 502 zwei Wellenhälften 502a und 502b, in die ein kalibrierter Sensor 531 eingepresst und angeschweißt wird. Die sechseckigen Aussparungen 543 und 544 an den Enden der Antriebswellen können mit den Getriebeeingangswellen 113 und 114 bzw. Getriebeausgangswellen 111 und 112 der bereits vorhandenen Außengetriebe 104 und 105 bzw. des bereits vorhandenen Mittengetriebes 101 verbunden werden. Dabei ist ein erster Teil 531a des Sensors als mechanische Wirkverbindung zwischen den Wellenhälften 502a und 502b ausgebildet und mit diesen fest verbunden (beispielsweise eingepresst, angeschweißt und/oder mittels Schrauben befestigt). Ein zweiter Teil 531b des Sensors, der den ersten Teil 531a derart umfänglich umschließt, dass seine Außenseite mit der Außenseite der beiden Wellenhälften 502a und 502b im Wesentlichen bündig abschließt, ist mittels Kugellagern 546 um die Längsachse der Antriebswelle 502 drehbar gelagert, wobei die Vorrichtung gegebenenfalls hier nicht dargestellten Labyrinthdichtungen oder V-Ringe zum Abdichten umfassen kann. Wie hier gezeigt, werden die Signale mittels eines Kabels 545 übertragen. Eine kabellose Übertragung ist jedoch ebenfalls denkbar.

An der Außenseite des drehbar gelagerten Teils 531b des Sensors kann außerdem ein hier nicht gezeigter Hebel befestigt sein, der zum Eingreifen in eine Aussparung in einer Abdeckung der Antriebswelle ausgebildet ist. Der Hebel und die Aussparung sind dann derart ausgebildet, dass eine Drehung des drehbar gelagerten Teils 531b des Sensors weitestgehend verhindert werden kann. Beim Betrieb der Antriebswelle wird daher der Teil 531b im Wesentlichen nicht mit der Antriebswelle mitgedreht. Das dient auch zum Schutz des Kabels 545.

## Patentansprüche

1. Schleuderstreuer mit einer Vorrichtung zur Bestimmung des Drehmoments einer Streuscheibe (326) eines Schleuderstreuers, **dadurch gekennzeichnet, dass** die Vorrichtung in Form eines unabhängigen vom Schleuderstreuer und als Bausatz oder Baugruppe ausgebildeten Sensormoduls (217) zum Austauschen, Anbringen an und/oder Integrieren in verschiedene Arten von Schleuderstreuern ausgebildet ist, wobei die Vorrichtung modular ausgebildet ist und zwei Magnetsensoren (333; 334; 335; 336) umfasst, die jeweils an einem einer Streuscheibe (326) zugeordneten Außengetriebe (104; 105; 304; 305; 404) angebracht sind und/oder einen Magnetsensor (323; 324; 325), der an einem Mittengetriebe (101; 301) angebracht ist.

2. Vorrichtung nach Anspruch 1, wobei die Vorrichtung zur Nachrüstung von Schleuderstreuern ausgebildet ist.

3. Vorrichtung nach Anspruch 1, wobei die Vorrichtung zum Anbringen an bzw. Integrieren in den Antriebsstrang (100; 300) der Streuscheibe (326) ausgebildet ist.

5. Vorrichtung nach einem der vorangegangenen Ansprüche, derart ausgebildet, dass sie an zugängliche Bereiche des Schleuderstreuers angebracht oder integriert werden kann.

6. Vorrichtung nach einem der vorangegangenen Ansprüche, wobei die Vorrichtung zum Ersetzen eines zerstörungsfrei zugänglichen Bestandteils, des Schleuderstreuers ausgebildet ist.

7. Vorrichtung nach einem der vorangegangenen Ansprüche, wobei die Vorrichtung zum Anbringen an ein Getriebe (101; 104; 105; 301; 304; 305; 404) ausgebildet ist.

8. Vorrichtung nach Anspruch 7, wobei die Vorrichtung zum Anbringen an eine Antriebswelle (102; 103; 202; 203) ausgebildet ist.

9. Vorrichtung nach einem der vorangegangenen Ansprüche, wobei die Vorrichtung zum Anbringen an ein einer Streuscheibe (326; 327) zugeordnetes Außengetriebe (104; 105; 304; 305; 404) und zum Anbringen an ein Mittengetriebe (101; 201), das mittels einer Antriebswelle (102; 103; 302; 303) mit einem der Streuscheibe (326; 327) zugeordneten Außengetriebe (104; 105; 304; 305; 404) verbunden ist, und zum Anbringen an eine Antriebswelle (102; 103; 302; 303), die ein Mittengetriebe (101; 301) und ein Außengetriebe (104; 105; 304; 305; 404) verbindet, ausgebildet ist.

10. Vorrichtung nach einem der vorangegangenen Ansprüche, umfassend einen Magnetsensor (331; 332; 531) zur Erfassung einer Magnetfeldänderung aufgrund der Torsion eines Bestandteils eines Antriebsstrangs (100; 300) des Schleuderstreuers.

11. Vorrichtung nach Anspruch 10, wobei der Magnetsensor (331; 332; 531) zur Erfassung einer Magnetfeldänderung aufgrund der Torsion der Antriebswelle (102; 103; 302; 303; 502) oder der Eingangswellen oder Ausgangswellen der Getriebe des Antriebsstrangs (101; 104; 105; 301; 304; 305; 404) ausgebildet ist.

12. Vorrichtung nach einem der vorangegangenen Ansprüche, umfassend einen Bestandteil, welcher ein magnetisches und/oder magnetisierbares Material umfasst.

13. Vorrichtung nach Anspruch 10, umfassend eine zumindest teilweise magnetische oder magnetisierbare Antriebswelle (102; 103; 302; 303; 502).

14. Vorrichtung nach einem der vorangegangenen Ansprüche, wobei die Vorrichtung modular ausgebildet ist und zwei magnetische oder magnetisierbare Antriebswellen (502) umfasst, die zum Austauschen von Antriebswellen (102; 103; 302; 303) des Schleuderstreuers ausgebildet sind und zwei Magnetsensoren (531), die jeweils einer Antriebswelle (502) zur Erfassung einer Magnetfeldänderung aufgrund der Torsion der Antriebswelle (502) ausgebildet sind.

15. Vorrichtung nach einem der vorangegangenen Ansprüche, wobei die Vorrichtung lösbar an dem Schleuderstreuer befestigt oder an den Schleuderstreuer nicht lösbar befestigt ist.

## Claims

1. Centrifugal spreader having a device for determining the torque of a spreader disc (326) of a centrifugal spreader, **characterized in that** the device is constructed in the form of a sensor module (217) formed independently of the centrifugal spreader and as a kit or subassembly, for replacement, attachment to and/or integration in various types of centrifugal spreaders, wherein the device is modularly constructed and comprises two magnetic sensors (333; 334; 335; 336), which are each attached to an external gearbox (104; 105; 304; 305; 404) assigned to a spreader disc (326), and/or a magnetic sensor (323; 324; 325) which is attached to a central gearbox (101; 301).

2. Device according to Claim 1, wherein the device is designed for upgrading centrifugal spreaders.

3. Device according to Claim 1, wherein the device is designed for attachment to or integration in the drive train (100; 300) of the spreader disc (326).

5. Device according to one of the preceding claims, designed such that it can be attached to or integrated in accessible regions of the centrifugal spreader.

6. Device according to one of the preceding claims, wherein the device is designed to replace a non-destructively accessible constituent part of the centrifugal spreader.

7. Device according to one of the preceding claims, wherein the device is designed for attachment to a gearbox (101; 104; 105; 301; 304; 305; 404).

8. Device according to Claim 7, wherein the device is designed for attachment to a drive shaft (102; 103; 202; 203).

9. Device according to one of the preceding claims, wherein the device is designed for attachment to an external gearbox (104; 105; 304; 305; 404) assigned to a spreader disc (326; 327), and for attachment to a central gearbox (101; 201), which is connected by means of a drive shaft (102; 103; 302; 303) to an external gearbox (104; 105; 304; 305; 404) assigned to the spreader disc (326; 327), and for attachment to the drive shaft (102; 103; 302; 303) which connects a central gearbox (101; 301) and an external gearbox (104; 105; 304; 305; 404).

10. Device according to one of the preceding claims, comprising a magnetic sensor (331; 332; 531) for detecting a magnetic field change on account of the torsion of a constituent part of a drive train (100; 300) of the centrifugal spreader.

11. Device according to Claim 10, wherein the magnetic sensor (331; 332; 531) is designed to detect a magnetic field change on account of the torsion of the drive shaft (102; 103; 302; 303; 502) or the input shafts or output shafts of the gearboxes of the drive train (101; 104; 105; 301; 304; 305; 404) .

12. Device according to one of the preceding claims, comprising a constituent part which comprises a magnetic and/or magnetizable material.

13. Device according to Claim 10, comprising an at least partly magnetic or magnetizable drive shaft (102; 103; 302; 303; 502).

14. Device according to one of the preceding claims, wherein the device is constructed modularly and comprises two magnetic or magnetizable drive shafts (502), which are designed to replace drive shafts (102; 103; 302; 303) of the centrifugal spreader, and two magnetic sensors (531) which are each designed to a drive shaft (502) to detect a magnetic field change on account of the torsion of the drive shaft (502).

15. Device according to one of the preceding claims, wherein the device is fixed detachably to the centrifugal spreader or is fixed non-detachably to the centrifugal spreader.

## Revendications

1. Épandeur centrifuge avec un dispositif destiné à la détermination du couple d'un disque d'épandage (326) d'un épandeur centrifuge, **caractérisé en ce que** le dispositif est conçu sous la forme d'un module de capteurs (217) indépendant de l'épandeur centrifuge et qui se présente sous la forme d'un kit de montage ou d'un module, en vue du remplacement, de la mise en place et/ou de l'intégration dans différents modèles d'épandeurs centrifuge ; selon lequel le dispositif est conçu de manière modulaire et comprend deux capteurs magnétiques (333 ; 334 ; 335 ; 336) qui sont mis en place respectivement au niveau d'un engrenage externe (104 ; 105 ; 304 ; 305 ; 404) associé à un disque d'épandage (326) et/ou comprend un capteur magnétique (323 ; 324 ; 325) qui est mis en place au niveau d'un engrenage central (101 ; 301).

2. Dispositif selon la revendication 1, selon lequel le dispositif est conçu en vue de l'équipement postérieur d'épandeurs centrifuge.

3. Dispositif selon la revendication 1, selon lequel le dispositif est conçu en vue de la mise en place, respectivement de l'intégration dans le groupe motopropulseur (100 ; 300) du disque d'épandage (326).

5. Dispositif selon l'une des revendications précédentes, lequel est conçu de telle sorte qu'il peut être mis en place ou intégré dans des zones accessibles de l'épandeur centrifuge.

6. Dispositif selon l'une des revendications précédentes, selon lequel le dispositif est conçu en vue du remplacement d'un composant de l'épandeur centrifuge qui est accessible de manière non destructible.

7. Dispositif selon l'une des revendications précédentes, selon lequel le dispositif est conçu en vue de sa mise en place au niveau d'un engrenage (101 ; 104 ; 105 ; 301 ; 304 ; 305 ; 404).

8. Dispositif selon la revendication 6, selon lequel le dispositif est conçu en vue de la mise en place au niveau d'un arbre d'entraînement (102 ; 103 ; 202 ; 203) .

9. Dispositif selon l'une des revendications précédentes, selon lequel le dispositif est conçu en vue de la mise en place au niveau d'un engrenage externe (104 ; 105 ; 304 ; 305 ; 404) associé à un disque d'épandage (326 ; 327) et en vue de la mise en place au niveau d'un engrenage central (101 ; 201), lequel est relié, au moyen d'un arbre d'entraînement (102 ; 103 ; 302 ; 303), à un engrenage externe (104 ; 105 ; 304 ; 305 ; 404) associé au disque d'épandage (326 ; 327), et en vue de la mise en place au niveau d'un arbre d'entraînement (102 ; 103 ; 302 ; 303), lequel relie un engrenage central (101 ; 301) et un engrenage externe (104 ; 105 ; 304 ; 305 ; 404).

10. Dispositif selon l'une des revendications précédentes, lequel comprend un capteur magnétique (331 ; 332 ; 531) destiné à la détection d'une modification du champ magnétique du fait de la torsion d'un composant d'un groupe motopropulseur (100 ; 300) de l'épandeur centrifuge.

11. Dispositif selon la revendication 10, selon lequel le capteur magnétique (331 ; 332 ; 531) est conçu en vue de la détection d'une modification du champ magnétique du fait de la torsion de l'arbre d'entraînement (102 ; 103 ; 302 ; 303 ; 502) ou de la torsion des arbres d'entrée ou des arbres de sortie de l'engrenage du groupe motopropulseur (101 ; 104 ; 105 ; 301 ; 304 ; 305 ; 404).

12. Dispositif selon l'une des revendications précédentes, lequel comprend un composant qui est constitué d'un matériau magnétique et/ou magnétisable.

13. Dispositif selon la revendication 10, lequel comprend un arbre d'entraînement (102 ; 103 ; 302 ; 303 ; 502) magnétique et/ou magnétisable, tout au moins en partie.

14. Dispositif selon l'une des revendications précédentes, selon lequel le dispositif est conçu de manière modulaire et comprend deux arbres d'entraînement (502) magnétiques et/ou magnétisables qui sont conçus en vue du remplacement des arbres d'entraînement (102 ; 103 ; 302 ; 303) de l'épandeur centrifuge, ainsi que deux capteurs magnétiques (531) qui sont conçus respectivement au niveau d'un arbre d'entraînement (502) en vue de la détection d'une modification du champ magnétique du fait de la torsion de l'arbre d'entraînement (502).

15. Dispositif selon l'une des revendications précédentes, selon lequel le dispositif est fixé de manière amovible au niveau de l'épandeur centrifuge ou est fixé de manière non amovible au niveau de l'épandeur centrifuge.
